# EUROPEAN PATENT APPLICATION

(11) **EP 3 185 063 A1**
(43) Date of publication of application: **28.06.2017**
(21) Application number: 14884329.5
(22) Date of filing: 30.12.2014
(51) Int. Cl.: G02B 27/22

(54) **STEREOSCOPIC VIEWING GLASSES**

(30) Priority: 28.09.2014 CN 201410510259
(71) Applicant: ZTE Corporation, Shenzhen, Guangdong 518057 (CN)
(72) Inventor: CHEN, Jianjiang, Shenzhen, Guangdong 518057 (CN); GAO, Feng, Shenzhen, Guangdong 518057 (CN); PENG, Chen, Shenzhen, Guangdong 518057 (CN)
(74) Representative: Savi, Massimiliano
(86) International application number: PCT/CN2014/095692
(87) International publication number: WO 2015/131648

(57) **Abstract**

A pair of stereoscopic viewing glasses is provided, including: lenses (1), a support (2), and a baffle plate (3). The support (2) includes a top surface (201) and side surfaces (202, 203). The top surface (201) and the side surfaces (202, 203) of the support (2) form a cavity, and the baffle plate (3) is fixed inside the cavity, and divides the cavity into two independent cavities (4). An accommodation space (5) for a terminal is equipped between a bottom edge of the baffle plate (3) and a bottom of the cavity. The cavity is equipped with an operating opening (6) by which an operation is conducted on the terminal. The top surface (201) is equipped with two mounting holes (7). The two mounting holes (7) are positioned on two sides of the baffle plate (3) respectively and are connected to the two independent cavities (4). The two mounting holes (7) have the lenses (1) mounted therein. The invention achieves a hand-operation to a mobile phone while viewing a stereoscopic picture on the mobile phone.

## Description

### Technical Field

The present invention relates to a pair of stereoscopic viewing glasses.

### Background

At present, the main modes applied to watch stereoscopic pictures and stereo videos on the mobile phone are respectively glasses-free 3D technology and Google's box viewing glasses. Herein, the stereo image resolution which used the glasses-free 3D technology is not high, and the frame appeared by the picture in front of the eyes is small, and the visual effect is not ideal. Google's box viewing glasses are an enclosed box body, and the mobile phone is placed in an enclosed cavity of the box body, such that the user cannot operate the mobile phone when they are watching the mobile phone. In addition, the box and mobile phone are respectively two kinds of individual products, and the box cannot be distributed with the mobile phone together.

### Summary

The aim of the present invention is to provide a pair of stereoscopic viewing glasses, which achieves a purpose that a mobile phone can be operated with a hand while viewing a stereoscopic picture on the mobile phone.

To solve the abovementioned technical problem, the present invention uses the following technical scheme.

The technical scheme used by the present invention is as follows. A pair of stereoscopic viewing glasses is provided, including: lenses, a support, and a baffle plate. The support includes a top surface and side surfaces, and the top surface and the side surfaces of the support form a cavity. The baffle plate is fixed inside the cavity, and the cavity is divided into two independent cavities. An accommodation space for a terminal is equipped between a bottom edge of the baffle plate and a bottom of the cavity. The cavity is equipped with an operating opening for the terminal. The top surface is equipped with two mounting holes, and the two mounting holes are positioned on two sides of the baffle plate respectively, and are connected to the two independent cavities. The two mounting holes both have the lenses mounted therein.

In an exemplary embodiment, the support further comprises a bottom face. The top surface and the side surfaces of the support form a cavity which has the operating opening.

In an exemplary embodiment, the support comprises two opposite side surfaces, and other side, which has not been sealed, of the cavity forms the operating opening for the terminal.

Or, the support comprises three side surfaces, and other side, which has not been sealed, of the cavity forms the operating opening for the terminal.

In an exemplary embodiment, two side surfaces of the support are equipped with creases respectively. Bottoms of the two side surfaces on one side of the creases buckle each other to form the bottom surface of the support. The two side surfaces on other side of the creases are vertical to the bottom of the support, and tops of the two side surfaces on the other side of the creases are fixed with the top face.

In an exemplary embodiment, the side surfaces of the support are formed by a one-step molding process.

In an exemplary embodiment, a bottom of one of two side surfaces of the support is equipped with an L-shaped protrusion, and a bottom of the other of two side surfaces of the support is equipped with a first opening, and the L-shaped protrusion is inserted into the first opening for fixing.

In an exemplary embodiment, the tops of the side surfaces of the support are equipped with first protrusions vertically, and the top surface is equipped with second openings, and the first protrusions are inserted into the second openings for fixing.

In an exemplary embodiment, two side edges of the baffle plate are equipped with second protrusions, and the side surfaces of the support are equipped with third openings, and the second protrusions are inserted into the third openings for fixing.

In an exemplary embodiment, the material of the support and the baffle plate is cardboard.

In an exemplary embodiment, the support and the baffle plate are cut by a package box of the terminal.

The beneficial effects of the technical scheme of the present invention are as follows.

Viewing glasses of the technical scheme of the present invention are constituted by the packaging box of the mobile phone itself. That is, the knife printing is punched in advance based on the construction of the viewing glasses on the packing box of the mobile phone; the user can split the packaging box along the knife printing after opening the packaging box, and acquire the parts of the viewing glasses, and assemble the parts to form the stereoscopic viewing glasses which adapt to the mobile phone. It is convenient to pack and transport. By cutting and constructing, the viewing glasses can be quickly formed.

The support of the viewing glasses of the technical scheme of the present invention is equipped with an operating opening, and the user can operate the mobile phone through the operating opening when using it, such as entering into the picture gallery, selecting a picture by sliding and so on. If there is an incoming call, the mobile phone also can be taken out conveniently and quickly from the viewing glasses, making it easy for the user to answer the phone.

The baffle plate in the technical scheme of the present invention has functions of fixing the side surface of the support, isolating the view of the left eye and right eye and fixing the mobile phone display screen, also has a function of contrasting the middle isolation line of the left and right format pictures. Therefore, the viewing glasses can be installed in place accurately.

### Brief Description of Drawings

FIG. 1 is a structural schematic diagram of a pair of stereoscopic viewing glasses connecting with the mobile phone in an embodiment of the present invention.
FIG. 2 is a structural schematic diagram of a pair of stereoscopic viewing glasses in an embodiment of the present invention.
FIG. 3 is an explosive view of a pair of stereoscopic viewing glasses in an embodiment of the present invention.
FIG. 4 and FIG. 5 are respectively a structural schematic diagram of two side surfaces of the stereoscopic viewing glasses in an embodiment of the present invention.
FIG. 6 is a structural schematic diagram of a baffle plate in an embodiment of the present invention.
FIG. 7 is a structural schematic diagram of a top surface of a support in an embodiment of the present invention.

### Detailed Description

The embodiments of the present utility model will be described below in detail in combination with the drawings. It should be illustrated that, in the case of not conflicting, the embodiments in the present application and features in these embodiments can be combined with each other arbitrarily.

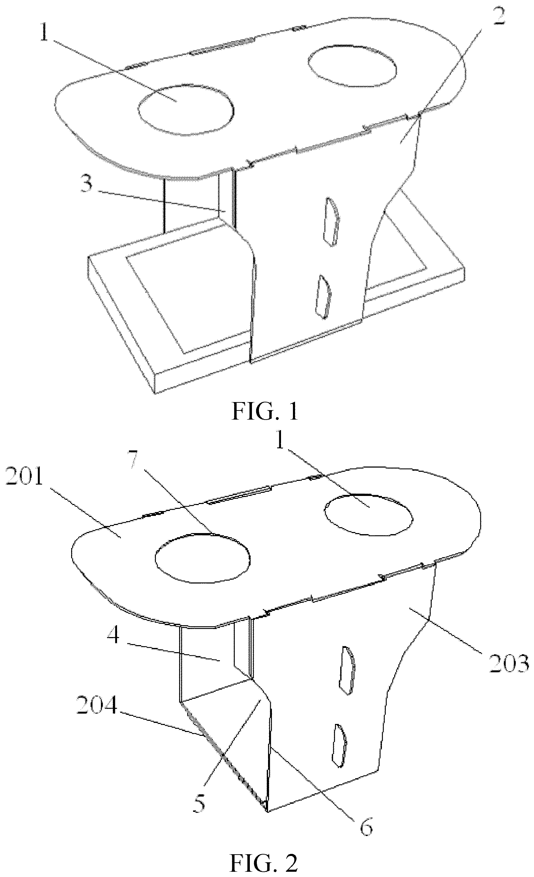

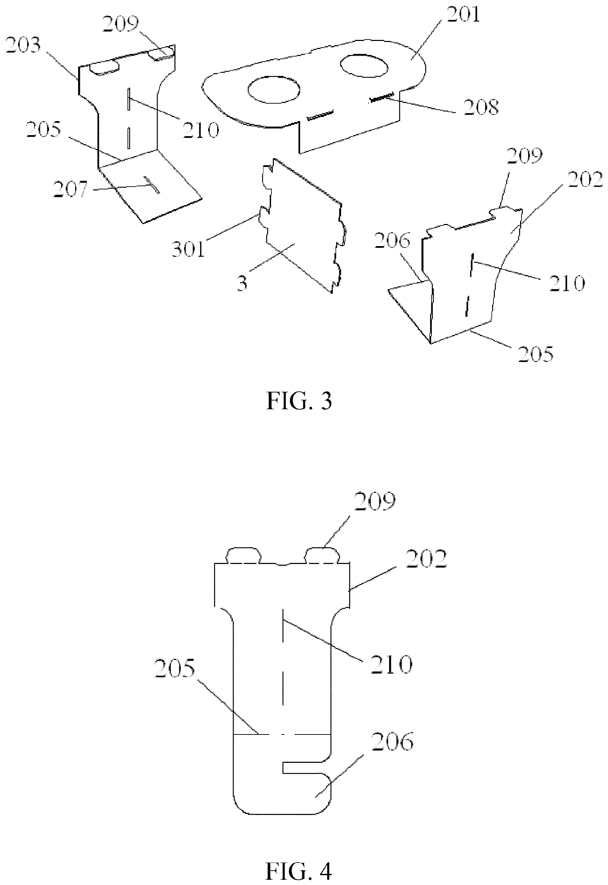

In the embodiments shown in Fig.1, Fig.2, and Fig.3, a pair of stereoscopic viewing glasses includes: lenses 1, a support 2, and a baffle plate 3 which are cut by a package box of the mobile phone. The material of the support and the baffle plate is cardboard. The support 2 includes a top surface 201 and side surfaces, and a bottom surface 204. The top surface 201 and the side surfaces and bottom surface 204 of the support form a cavity. The baffle plate 3 is fixed inside the cavity, and is vertical to the bottom of the cavity and divides the cavity into two independent cavities 4. An accommodation space 5 for a terminal is equipped between a bottom edge of the baffle plate 3 and a bottom of the cavity. The terminal, such as a mobile phone, is fixed and mounted in the accommodation space 5. As shown in Fig.1, Fig.2, and Fig.3, the support includes two opposite side surfaces, appeared in shape U, and other sides, which have not been sealed, of the cavity form the operating openings 6 for the terminal. The operating openings 6 respectively connect to the two independent cavities 5. The top surface 201 is equipped with two mounting holes 7. The two mounting holes 7 are positioned on two sides of the baffle plate 3, and are connected to the two independent cavities 5 respectively. The lenses 1 are fixed in the mounting holes.

As shown in Fig.2, Fig.3, Fig.4, and Fig.5, the support includes two opposite side surfaces, appeared in shape U, and top surface 201 is fixed in the ends of the U-shaped side surfaces. The U-shaped side surfaces may be formed by a one-step molding process, and also may include a first side surface 202 and a second side surface 203. In the first side surface 202 and the second side surface 203, there are respectively equipped with straight line creases 205 which runs through the whole width of the side face. The bottom of one side of the crease of a first side surface 202 is equipped with an L-shaped protrusion 206. The bottom of one side of the crease of a second side surface 203 is equipped with a first opening 207 which is corresponding to the L-shaped protrusion 206. The L-shaped protrusion 206 is inserted into the first opening 207 to buckle to form the bottom surface of the support 204. The parts on the other sides of the creases of the first side surface 202 and the second side surface 203 are vertical to the bottom surface of the support 204. Tops of the parts on the other sides of the creases of the first side surface 202 and the second side surface 203 are equipped with first protrusions 209 vertically. The first protrusions 209 are an axial symmetric hexagon. The tops of the first side surface 202 and the second side surface 203 are equipped with two first protrusions 209 respectively. Both sides of the top surface 201 are equipped with vertical downward rectangular protrusions. The creases between the rectangular protrusions and both sides of top surface 201 are equipped with two second openings 208 respectively. The first protrusion 209 is inserted into second opening 208 to buckle.

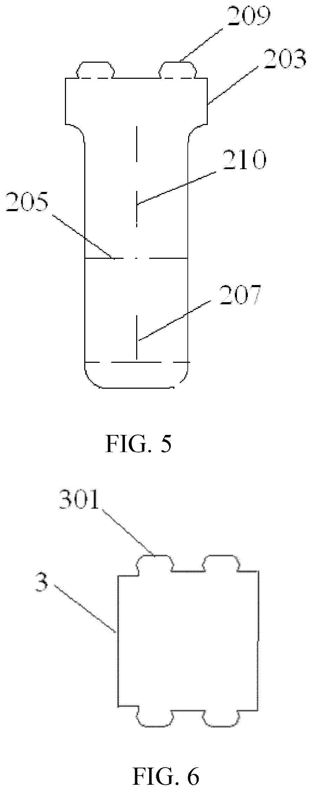

As shown in Fig. 6, the baffle plate 3 is a rectangle, and the two side edges of the baffle plate 2 are equipped with two second protrusions 301 respectively. The first side surface 202 and the second side surface 203 of the support are equipped with corresponding third openings 210 respectively. The second protrusion 301 is inserted into the third opening 210 for fixing.

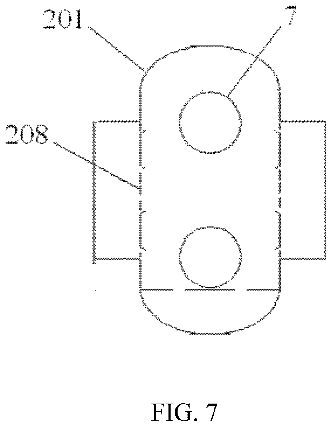

As shown in Fig. 7, both sides of the top surface 201 are equipped with vertical downward rectangular protrusions. The creases between the rectangular protrusions and both sides of top surface 201 are equipped with two second openings 208 respectively. The surface of the top surface 201 is equipped with two mounting holes 7 symmetrically. The mounting hole 7 is equipped with lens 1. The focal length of two lenses 1 is related to the distance between the lens 1 and the display screen. In general, it is almost equal. The focal length in common use is 8-10cm. The lens 1 is fixed with the mounting hole 7 by using the double faced adhesive tape, or the other modes.

In the embodiments of the present invention, when mounting lenses 1, it is needed to maintain a certain distance with the mobile phone screen; and people's eyes watch about the left and right format stereoscopic pictures and video on the display screen of the mobile phone through two lenses 1. The connection between the various components of embodiments of the present invention can also use a magnet or a magic buckle to connect.

Though the embodiments disclosed in the present invention are as above, the above-mentioned contents are the embodiments used to be convenient to understand the present invention, and are not used for limiting the present invention. For one skilled in the art, any modification and variations in the forms of embodiments and details can be made without departing the essence and scope disclosed in the present invention. However, the patent protection scope of the present invention shall be still defined by the scope of the appended claims.

### Industrial Applicability

Viewing glasses of the technical scheme of the present invention are constituted by using the packaging box of the mobile phone itself. That is, the knife printing is punched in advance according to the construction of the viewing glasses on the packing box of the mobile phone; the user may split the packing box along the knife printing after opening the packing box, and acquire the parts of the viewing glasses, and assemble the parts to form the stereoscopic viewing glasses which adapt to the mobile phone. It is convenient to pack and transport. By cutting and constructing, the viewing glasses can be quickly formed.

The support of the viewing glasses of the technical scheme of the present invention is equipped with an operating opening. The user can operate the mobile phone through the operating opening when using it, such as entering into the picture gallery, selecting a picture by sliding and so on. If there is an incoming call, the mobile phone also can be taken out conveniently and quickly from the viewing glasses, which makes it easy for users to answer the phone.

The baffle plate in the technical scheme of the present invention has functions of fixing the side surfaces of the support, isolating the view of the left eye and right eye and fixing the mobile phone display screen, also has a function of contrasting the middle isolation line of the left and right format pictures, making the viewing glasses installed in place accurately. Therefore, the present invention has an extremely strong industrial applicability.

## Claims

1. A pair of stereoscopic viewing glasses, comprising: lenses, a support, and a baffle plate, wherein,
the support comprises a top surface and side surfaces, and the top surface and the side surfaces of the support form a cavity;
the baffle plate is fixed inside the cavity and divides the cavity into two independent cavities; an accommodation space for a terminal is equipped between a bottom edge of the baffle plate and a bottom of the cavity; the cavity is equipped with an operating opening for the terminal; the top surface is equipped with two mounting holes, and the two mounting holes are positioned on two sides of the baffle plate respectively, and are connected to the two independent cavities; and
the two mounting holes both are mounted with the lenses.

2. The pair of stereoscopic viewing glasses according to claim 1, wherein, the support further comprises a bottom face, and the top face, the side surfaces and the bottom surface of the support form a cavity which has the operating opening.

3. The pair of stereoscopic viewing glasses according to claim 1, wherein: the support comprises two opposite side surfaces, and other side, which has not been sealed, of the cavity forms the operating opening for the terminal; or
the support comprises three side surfaces, other side, which has not been sealed, of the cavity forms the operating opening for the terminal.

4. The pair of stereoscopic viewing glasses according to claim 3, wherein: two side surfaces of the support are equipped with creases respectively; bottoms of the two side surfaces on one side of the creases buckle each other to form the bottom surface of the support; the two side surfaces on other side of the creases are vertical to the bottom of the support, and tops of the two side surfaces on the other side of the creases are fixed with the top face.

5. The pair of stereoscopic viewing glasses according to claim 3, wherein: the side surfaces of the support are formed by a one-step molding process.

6. The pair of stereoscopic viewing glasses according to claim 4, wherein: a bottom of one of two side surfaces of the support is equipped with an L-shaped protrusion, and a bottom of the other of two side surfaces of the support is equipped with a first opening, and the L-shaped protrusion is inserted into the first opening for fixing.

7. The pair of stereoscopic viewing glasses according to any one of claims 1-6, wherein:
the tops of the side surfaces of the support are equipped with first protrusions vertically, and the top surface is equipped with second openings, and the first protrusions are inserted into the second openings for fixing.

8. The pair of stereoscopic viewing glasses according to any one of claims 1-6, wherein:
two side edges of the baffle plate are equipped with second protrusions, and the side surfaces of the support are equipped with third openings, and the second protrusions are inserted into the third openings for fixing.

9. The pair of stereoscopic viewing glasses according to any one of claims 1-6, wherein:
the material of the support and the baffle plate is cardboard.

10. The pair of stereoscopic viewing glasses according to any one of claims 1-6, wherein:
the support and the baffle plate are cut by a package box of the terminal.
